# EUROPEAN PATENT APPLICATION

(11) **EP 3 444 120 A1**
(43) Date of publication of application: **20.02.2019**
(21) Application number: 18183356.7
(22) Date of filing: 13.07.2018
(51) Int. Cl.: B41M 5/50, B41M 5/52, B44C 5/04, B41M 3/18

(54) **IMPROVEMENTS IN OR RELATING TO ORGANIC MATERIAL**

(30) Priority: 17.07.2017 GB 201711418
(71) Applicant: Altro Limited, Letchworth Garden City Hertfordshire SG6 1NW (GB)
(72) Inventor: Peace, Richard John, Letchworth, Hertfordshire SG6 1NW (GB); Callis, Martin David, Letchworth, Hertfordshire SG6 1NW (GB); Jung, Bernhard, 06847 Dessau-Rosslau (DE); Fasshauer, Oliver, 06386 Quellendorf (DE)
(74) Representative: Peel, James Peter

(57) **Abstract**

The invention provides a lightweight layered product for use in a digital printing process wherein the layered product consists essentially of:
a reinforcing base layer having a support; and
a printing layer suitable for receiving a print design;
and a method of preparing a printed layered product which method comprises the following steps:
Providing a lightweight layered product according to the invention;
Winding the lightweight layered product on to a roll;
Loading the roll into a printing machine;
Applying a decorative layer having a print design to the printing layer of the lightweight layered product; and
Winding the printed layered product on to a roll for transfer to a production line; the layered product and method allow the incorporation of digital printing techniques into an industrial production line for the preparation of a surface-covering material without the need for heavy duty lifting and rolling equipment.

## Description

The present invention relates to a layered product which is suitable for use being digitally printed, a surface-covering material comprising such a printed layered product, and to a method of manufacturing a surface-covering material using the layered product.

There is a general desire to improve the appearance of the materials used to cover the internal surfaces of buildings such as their floors, ceilings, and walls in order to provide a better environment for the users or inhabitants of the buildings. Digitally printed images provide particular improvements to the appearance of such materials as the product may be personalised to the end user and in the production process as in analogue printing, plates need to be regularly replaced with some variation in the printed product.

Currently, it is not straightforward to incorporate digital printing into conventional continuous production lines for a surface covering material for the following reasons:
- The printhead needs to be as wide as the product, typically 2m, 3m or 4m. Printheads of this width are not readily available. The "raster" (i.e. side-to-side) printing methods commonly used by wide format printers are not compatible with conventional continuous production lines as the substrate speed is not constant in raster printing.
- Constant speed is critical to the quality of the digital print, and this consistency is not available from many conventional continuous production lines.
- Inkjet printheads require frequent pauses in printing for maintenance (e.g. automated cleaning cycles). In a conventional continuous production line, this would produce large quantities of scrap material as the other elements of the production line cannot be easily stopped.
- High quality inkjet printing requires a clean environment with a stable temperature. The dust and heat from a conventional continuous production line is not conducive to providing these conditions.

Therefore, there is a problem about how to incorporate a digitally printed image into a surface-covering material without having to invest in heavy lifting and rolling equipment whilst still having a stable substrate on which the image can be printed without distortion of the image due to variations in its surface. Printing on the surface of a finished piece of surface covering material would not give a durable image. Therefore, the printed image needs to be encapsulated inside the surface-covering construction. This requires that a layered product has an image printed on to it and is then processed to apply a wear layer on top of the image. To do so requires a sufficiently long length of layered product to make the process efficient. The base layer of a surface-covering material is typically thicker and heavier than the wear layer e.g. in a 2mm floor-covering product the base layer would be 1.2-1.7mm thick.

A way of ameliorating these problems has been sought.

According to the invention there is provided a lightweight layered product for use in a digital printing process wherein the layered product consists essentially of:
a reinforcing base layer having a support; and
a printing layer suitable for receiving a print design.

According to the invention there is also provided a lightweight printed layered product which comprises which comprises:
a reinforcing base layer having a support;
a printing layer suitable for receiving a print design; and
a decorative layer having a printed design wherein the decorative layer is provided on an upper surface of the printing layer.

According to the invention there is further provided a surface-covering material comprising a wear layer comprising a clear plastics material and a lightweight printed layered product according to the invention wherein the wear layer is arranged on an upper surface of the decorative layer of the printed layered product.

According to the invention there is also provided a method of preparing a printed layered product which method comprises the following steps:
Providing a lightweight layered product according to the invention;
Winding the lightweight layered product on to a roll;
Loading the roll into a printing machine;
Applying a decorative layer having a print design to the printing layer of the lightweight layered product; and
Winding the printed layered product on to a roll for transfer to a production line.

According to the invention there is further provided a method of preparing a surface-covering material which method comprises a step of applying a wear layer to the printed layered product.

According to the invention there is also provided a method of preparing a floor-covering material which method comprises the following steps:
Providing a printed layered product according to the invention;
Inverting the printed layered product;
Applying a backing layer to the reinforcing base layer of the inverted printed layered product;
Inverting the product; and
Applying a wear layer to the decorative layer of the product.

According to the invention there is further provided a roll of a lightweight layered product for use in a digital printing process wherein the roll comprises a roll core and the layered product which consists essentially of:
a reinforcing base layer having a support; and
a printing layer suitable for receiving a print design.

According to the invention there is also provided a roll of a lightweight printed layered product wherein the roll comprises a roll core and the printed layered product which comprises:
a reinforcing base layer having a support;
a printing layer suitable for receiving a print design; and
a decorative layer having a printed design wherein the decorative layer is provided on an upper surface of the printing layer

Advantages of the invention include that the layered product is lightweight as it consists essentially of a base layer and a pigmented printing layer. A lightweight layered product may simply be handled in a factory on a roll without the need for expensive heavy lifting or rolling equipment to prepare a finished surface-covering product. Additionally, the reinforcing base layer provides the layered product with dimensional stability such that the layered product is suitable for being printed on without distortion of any printed image. Furthermore, use of the layered product according to the invention minimises the thickness of a roll of the layered product. Use of the layered product according to the invention also maximises its print length for a pre-defined roll thickness and/or roll weight.

It should be understood that the lightweight layered product consists essentially of a reinforcing base layer and a printing layer such that the lightweight layered product may include an additional component or layer other than the essential layers of the layered product if they do not substantially change the weight and/or thickness of the layered product such that it is suitable for being wound onto a jumbo roll. For example, the base layer and/or the printing layer may comprise or be formed from a plurality of layers. In some embodiments, the lightweight layered product consists of the reinforcing base layer and the printing layer.

In some embodiments, the reinforcing base layer comprises a scrim layer impregnated with a gelled plastic material. In some embodiments, the support may be a film and/or a non-woven fabric. In some embodiments, the support may be a polymeric film (e.g. a polyester film) and/or may be formed from one or more fibres which include glass-fibre, vinylon fibre, high-density polyethylene fibre, aramid fibre, carbon fibre, cellulose, and/or polyester fibre; for example, a cellulose/polyester support reinforced with a 32 tex glass crennette. In some embodiments, the gelled plastic material may comprise one or more of the following polymers: PVC, polyvinyl butyral (PVB), polylactic acid (PLA), polyester, a polyolefin, a thermoplastic elastomer and/or polyacrylate.

In some embodiments, the lightweight printed layered product may consist essentially of: a reinforcing base layer having a support; a printing layer suitable for receiving a print design; and a decorative layer having a printed design wherein the decorative layer is provided on an upper surface of the printing layer. In some embodiments, the lightweight printed layered product may consist of: a reinforcing base layer having a support; a printing layer suitable for receiving a print design; and a decorative layer having a printed design wherein the decorative layer is provided on an upper surface of the printing layer.

In some embodiments, the printing layer may be suitable for receiving a printed design or having a printed design applied to it by a digital printer. In some embodiments, the printing layer may have a pigment which is suitable for providing a background to a printed design where such a pigment may have a similar or contrasting colour to one or more colours in the printed design. In some embodiments, the printing layer may be formed from a plastics material which may comprise, for example, one or more of the following polymers: PVC, polyvinyl butyral (PVB), polylactic acid (PLA), polyester, a polyolefin, a thermoplastic elastomer and/or polyacrylate. In some embodiments, the layered product and/or the printed layered product may be in the form of a roll.

In some embodiments, the decorative layer may have a digitally printed design. In some embodiments, the surface-covering material may be suitable for covering a surface such as a floor, ceiling, or wall in or on a building. In some embodiments, the wear layer may comprise a clear plastics material including one or more of the following polymers: PVC, polyvinyl butyral (PVB), polylactic acid (PLA), polyester, a polyolefin, a thermoplastic elastomer and/or polyacrylate. In some embodiments, the wear layer may comprise a non-slip layer of one or more particles suitable for providing a non-slip surface. In some embodiments, the particles of the non-slip layer may be at least partially embedded in the wear layer. In some embodiments, the surface-covering material may have a protective coating layer on an upper surface of the wear layer.

In some embodiments, the decorative layer may comprise a latex-based ink. In some embodiments, the printed design comprises a latex-based ink. It has surprisingly been found that the wear layer has improved adhesion to the decorative layer and/or to the printed design when the decorative layer and/or the printed design comprises a latex-based ink.

In some embodiments, the backing layer may comprise a foamed plastics material such that the backing layer is capable of imparting a sound attenuation effect, for example an acoustic impact sound reduction of more than lOdB, for example 11, 12, 13, 14 or 15dB. In some embodiments, the foamed plastics material may be mechanically foamed by incorporating one or more types of compressible plastic spheres. In some embodiments, the foamed plastics material may be chemically foamed by being formed with a foaming agent such as an azodicarbonamide. In some embodiments, the backing layer may comprise one or more of the following polymers: PVC, polyvinyl butyral (PVB), polylactic acid (PLA), polyester and/or polyacrylate.

In some embodiments, the surface-covering material, and/or the floor-covering material according to the invention may comprise a protective coating layer. In some embodiments, the protective coating layer may comprise a cured polymer layer which seals the surface-covering material and/or the floor-covering material. In some embodiments, the protective coating layer includes a polyurethane, polyacrylate, urethane acrylate or a PVDF based composition.

In some embodiments, the surface-covering material, and/or the floor-covering material according to the invention may comprise a non-slip layer on its upper surface. In some embodiments, the non-slip layer comprises one or more particles suitable for providing a non-slip surface. In some embodiments, the particles may be at least partially embedded in the surface-covering material and/or the floor-covering material. The particles may comprise one or more types of slip resistant particles such as a glass particle, a silica particle, a polymeric particle (for example Nylon (Trademark)), a ceramic particle (e.g. porcelain) and an aluminium oxide particle. In some embodiments, the floor-covering material may be embossed.

In some embodiments, the floor-covering material may be a non-slip flooring material. In some embodiments, the flooring material may comprise a non-slip layer. In some embodiments, a non-slip layer may comprise one or more non-slip particles. In some embodiments, the particles may be smooth particles. A smooth particle is a particle which has no angular protrusion or indentation, for example a particle which has no protrusion or indentation having an outward facing angle of about 90° or less. In some embodiments, the particles may be one or more of a smooth sphere, bead, and/or grain. The advantage of using a smooth particle in the floor-covering material according to the invention is that the cured coating is easier to clean as the coating lacks any angular surface in which a cleaning material (for example the fibres of a mop) may be caught.

In some embodiments, the step of providing a lightweight layered product according to the invention comprises the steps of:
Providing a layer of fabric material;
Coating the fabric material with a plastics composition; and
Applying a printing layer.

In some embodiments, the step of coating the fabric material comprises gelling the plastics composition. In some embodiments, the step of applying the printing layer comprises gelling the printing layer. In some embodiments, the printing machine used in the method of the invention may be a roll to roll printing machine. In some embodiments, the printing machine may be a digital printing machine. In some embodiments, the step of winding the layered product may use a jumbo roll. In some embodiments, a jumbo roll may have a width of from 1m, for example from 2m to 5m, for example to 4m; for example, the jumbo roll may have a length of about 3m. In some embodiments, the layered product may have a thickness of from 0.05mm to 1.2mm, for example about 0.85mm. In some embodiments, a jumbo roll of the layered product may have a weight of from 300 to 2000kg, for example about 1000kg. In some embodiments, the layered product may have a length of from about 100m, for example from 200 to 600m, for example to 500m, for example about 450m.

In some embodiments, the method may further comprise a step of applying a wear layer to an upper surface of the layered product (for example to an upper surface of the decorative layer) to form an upper layer. In some embodiments, the method may further comprise a step of applying a protective coating layer to an upper surface of layered product (for example to an upper surface of the wear layer) to form an upper layer. In some embodiments, the method may further comprise a step of applying a non-slip layer to the upper layer (for example to an upper surface of the wear layer or of the protective coating layer).

In some embodiments, the method may comprise the following steps to apply a backing layer to a lower surface of the reinforcing base layer:
Inverting the product;
Applying a backing layer to the reinforcing base layer;
Inverting the product. In some embodiments, the product may be inverted to apply the backing layer and inverted again before a wear layer is applied.

In some embodiments, the roll according to the invention may consist essentially of a roll core and the lightweight layered product or the lightweight printed layered product. In some embodiments, the roll core may be a cylindrical support for the roll. In some embodiments, the roll core may be formed from paper, cardboard, and/or metal (such as steel or aluminium). In some embodiments, the roll may comprise a roll core and a lightweight printed layered product which comprises a layered product according to the invention and a decorative layer having a printed design wherein the decorative layer is arranged on an upper surface of the printing layer.

The invention will now be described with reference to the following Figures of the accompanying drawings which are not intended to limit the scope of the invention in which:
**Figure 1** shows a schematic cross-section of a first embodiment of a layered product according to the invention;
**Figure 2** shows a schematic cross-section of a first embodiment of a printed layered product according to the invention;
**Figure 3** shows a schematic cross-section of a first embodiment of a surface-covering material according to the invention which incorporates the first embodiment of the printed layered product;
**Figure 4** shows a schematic cross-section of a first embodiment of a flooring material according to the invention which incorporates the first embodiment of the printed layered product;
**Figure 5** shows a schematic cross-section of a second embodiment of a flooring material according to the invention which incorporates the first embodiment of the printed layered product;
**Figure 6** shows a schematic cross-section of a third embodiment of a flooring material according to the invention which incorporates the first embodiment of the printed layered product; and
**Figure 7** shows a schematic cross-section of a roll of the layered product according to the invention.

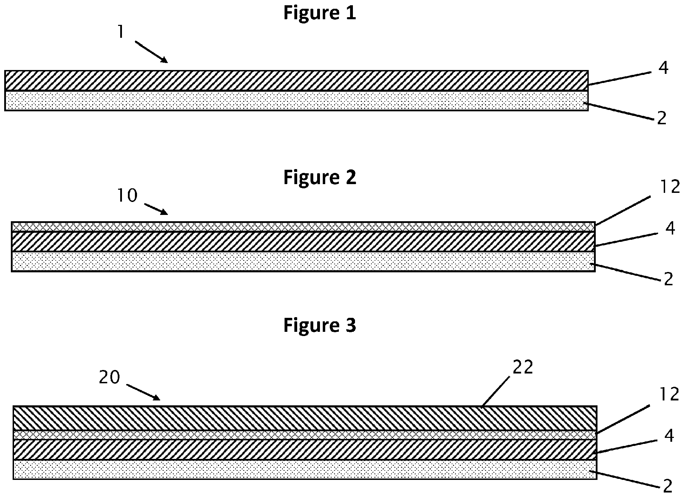

The first embodiment of a lightweight layered product according to the invention is indicated generally at 1 on Figure 1. Lightweight layered product 1 has a reinforcing base layer 2 and a pigmented printing layer 4 on an upper surface of the base layer 2. The reinforcing base layer 2 comprises a support which is a layer of fabric (such as a scrim layer) impregnated with a gelled plastic material. The support may include glass-fibre, vinylon fibre, high-density polyethylene fibre, aramid fibre, carbon fibre, cellulose, and/or polyester fibre; for example, a cellulose/polyester support reinforced with a 32 tex glass crennette. The gelled plastic material may comprise one or more of the following polymers: PVC, polyvinyl butyral (PVB), polylactic acid (PLA), polyester and/or polyacrylate. The pigmented printing layer 4 is a printing layer as it is suitable for receiving a printed design or having a printed design applied to it by a digital printer and has a pigment which is suitable for providing a background to such a printed design where such a pigment may have a similar or contrasting colour to one or more colours in the printed design. The printing layer 4 is formed from a plastics material. Examples of suitable plastics materials include: PVC, polyvinyl butyral (PVB), polylactic acid (PLA), polyester and/or polyacrylate. The layered product 1 is lightweight such that it may easily be transported around a factory floor in a jumbo roll such that heavy duty lifting and rolling equipment is not required.

In an alternative embodiment, the support may be a film, for example a polymeric film.

The first embodiment of a lightweight printed layered product according to the invention is indicated generally at 10 on Figure 2. Lightweight printed layered product 10 comprises a lightweight layered product 1 according to the invention and a decorative layer 12 on an upper surface of the printing layer 4. Thus, printed layered product 10 has the following layers: a base layer 2, a pigmented printing layer 4 on an upper surface of the base layer 2, and a decorative layer 12 on an upper surface of the pigmented printing layer 4. The decorative layer 12 comprises a printed design formed from a latex-based ink which is applied by a digital printer.

The first embodiment of a surface-covering material according to the invention is indicated generally at 20 on Figure 3. Surface-covering material 20 comprises a lightweight printed layered product 10 as described above in relation to Figure 2 with a wear layer 22 arranged on an upper surface of the decorative layer 12. Thus, the surface-covering material 20 has the following layers: a base layer 2, a pigmented printing layer 4 on an upper surface of the base layer 2, a decorative layer 12 on an upper surface of the pigmented printing layer 4, and a wear layer 22 arranged on an upper surface of the decorative layer 12. The surface-covering material 20 may be suitable for covering a surface such as a floor, ceiling, or wall in or on a building. The wear layer 22 comprises a clear plastics material such that the printed design on the decorative layer 12 is visible. The plastics material may comprise one or more of the following polymers: PVC, polyvinyl butyral (PVB), polylactic acid (PLA), polyester and/or polyacrylate

In an alternative embodiment, the wear layer 22 may comprise a non-slip layer 36 of one or more particles 38 suitable for providing a non-slip surface wherein such particles 38 are at least partially embedded in the wear layer 22. In a further alternative embodiment, the surface-covering material 20 may have a protective coating layer 34 on an upper surface of the wear layer 22.

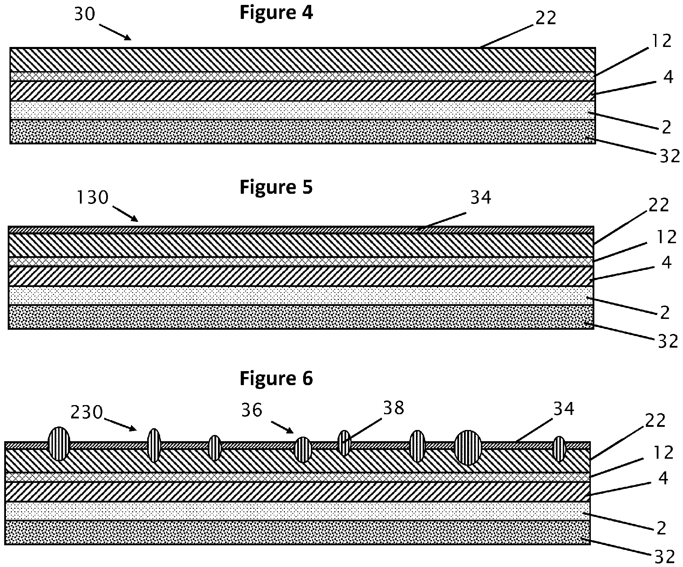

The first embodiment of a floor-covering material according to the invention is indicated generally at 30 on Figure 4. Floor-covering material 30 comprises a surface-covering material 20 according to the invention with a backing layer 32 applied to a lower surface of the base layer 2. Thus, the floor-covering material 30 has the following layers: a base layer 2, a backing layer 32 applied to a lower surface of the base layer 2, a pigmented printing layer 4 on an upper surface of the base layer 2, a decorative layer 12 on an upper surface of the pigmented printing layer 4, and a wear layer 22 on an upper surface of the decorative layer 12. The backing layer 32 comprises a foamed plastics material such that the backing layer 32 is capable of imparting a sound attenuation effect, for example an acoustic impact sound reduction of 12, 13, 14 or 15dB. The foamed plastics material may be mechanically foamed by incorporating one or more types of compressible plastic spheres or may be chemically foamed by being formed with a foaming agent such as an azodicarbonamide. The backing layer 32 may comprise one or more of the following polymers: PVC, polyvinyl butyral (PVB), polylactic acid (PLA), polyester and/or polyacrylate.

The second embodiment of a floor-covering material according to the invention is indicated generally at 130 on Figure 5. Floor-covering material 130 comprises a floor-covering material 30 according to the invention with a protective coating layer 34 applied to an upper surface of the wear layer 22. Thus, the floor-covering material 30 has the following layers: a base layer 2, a backing layer 32 applied to a lower surface of the base layer 2, a pigmented printing layer 4 on an upper surface of the base layer 2, a decorative layer 12 on an upper surface of the pigmented printing layer 4, a wear layer 22 on an upper surface of the decorative layer 12, and a protective coating layer 34 applied to an upper surface of the wear layer 22. The protective coating layer 34 comprises a cured polymer layer. Suitable polymers for use in the protective coating layer 34 include polyurethane, polyacrylate, urethane acrylate or a PVDF based composition. A suitable coating composition for forming protective coating layer 34 is a UV curable mixture containing from 20 to 30 parts by weight of oxybis(methyl-2,1-ethanediyl) diacrylate, from 10 to less than 20 parts by weight of 2-phenoxyethyl acrylate, from 10 to less than 20 parts by weight of acrylate resin, from 2.5 to 5 parts by weight of (1-methyl-1,2-ethanediyl)bis[oxy(methyl-2,1-ethanediyl)] diacrylate, from 1 to 5 parts by weight of benzophenone and from 1 to 5 parts by weight of 1-6,hexanedioldiacrylate was prepared.

The third embodiment of a floor-covering material according to the invention is indicated generally at 230 on Figure 6. Floor-covering material 230 comprises a floor-covering material 130 according to the invention with a non-slip layer 36 applied to an upper surface of the protective coating layer 22. Thus, the floor-covering material 30 has the following layers: a base layer 2, a backing layer 32 applied to a lower surface of the base layer 2, a pigmented printing layer 4 on an upper surface of the base layer 2, a decorative layer 12 on an upper surface of the pigmented printing layer 4, a wear layer 22 on an upper surface of the decorative layer 12, a protective coating layer 34 applied to an upper surface of the wear layer 22, and a non-slip layer 36 on an upper surface of the protective coating layer. Non-slip layer 36 comprises one or more particles 38 suitable for providing a non-slip surface wherein such particles 38 are at least partially embedded in the wear layer 22. The particles 38 may comprise one or more types of slip resistant particles such as aluminium oxide, silicon carbide, quartz and/or glass.

In alternative embodiment, the non-slip layer 36 may be applied to the wear layer 22 before the protective coating layer 34 is applied such that the particles 38 are at least partially embedded in the wear layer 22.

The floor-covering material 30,130,230 may optionally be embossed. The surface-covering material 20 and/or the floor-covering material 30,130,230 may optionally be cut up into tiles.

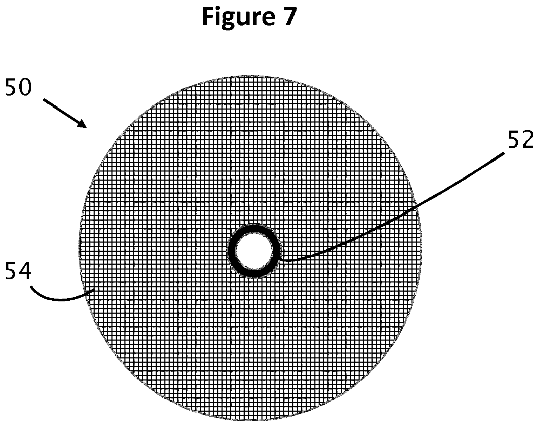

A roll according to the invention is indicated generally at 50 on Figure 7. Roll 50 consists of a hollow cylindrical roll core 52 around which layers 54 of a lightweight layered product 1 according to the invention is wound. Roll 50 may be in the form of a jumbo roll.

In an alternative embodiment, the roll 50 may consist of a roll core 52 around which layers 54 of a lightweight printed layered product 10 is wound.

The invention will now be illustrated with reference to the following Example which is not intended to limit the scope of the claimed invention.

### EXAMPLE

The method of the invention of the invention was performed by carrying out the following steps:
a. coating a non-woven glass fibre with an impregnation layer of plastics material and gelling (the coating) on a heated drum;
b. Applying a printing layer formed from a pigmented plasticised PVC composition where the pigment is white;
c. gelling the white printing layer on a heated drum;
d. Winding the layered product on a jumbo roll;
e. Loading the jumbo roll onto a roll-to-roll digital printer;
f. Printing onto the surface of the white printing layer using digital printing to form a decorative layer having a digitally printed design;
g. Curing and/or drying the printed ink with heat and/or radiation;
h. Winding the printed layered product onto a jumbo roll;
i. Loading the jumbo roll onto a production line;
j. Inverting the printed layered product;
k. Applying a backing layer comprising a foam-forming plastics material comprising a plasticised PVC composition and an azodicarbonamide in a sufficient amount to provide an acoustic impact sound reduction of 14dB;
l. Gelling the backing layer on a heated drum;
m. Inverting the product;
n. Applying a wear layer comprising a clear plastics material having a plasticised PVC composition;
o. Gelling the wear layer in an oven;
p. Embossing the wear layer;
q. Cooling the surface-covering material;
r. Applying a polyacrylate protective coating layer and curing it;
s. Winding the product into a roll of the required length; and optionally
t. Cutting the product into tiles.

The jumbo roll of steps d to i is illustrated in Figure 7.

## Claims

1. A lightweight layered product for use in a digital printing process wherein the layered product consists essentially of:
a reinforcing base layer having a support; and
a printing layer suitable for receiving a print design.

2. A layered product as defined in Claim 1 wherein the reinforcing base layer comprises a scrim layer impregnated with a gelled plastic material.

3. A layered product as defined in Claim 1 or Claim 2 wherein the support is a film and/or a non-woven material.

4. A layered product as defined in any one of the preceding Claims wherein the printing layer has a pigment which is suitable for providing a background to a printed design.

5. A lightweight printed layered product which comprises a lightweight layered product as defined in any one of the preceding Claims and a decorative layer having a printed design wherein the decorative layer is provided on an upper surface of the printing layer; preferably the decorative layer has a digitally printed design.

6. A printed layered product as defined in Claim 5 wherein the decorative layer comprises a latex-based ink.

7. A surface-covering material comprising a wear layer comprising a clear plastics material and a lightweight printed layered product as defined in Claim 5 or Claim 6 wherein the wear layer is provided on an upper surface of the decorative layer of the printed layered product; preferably the wear layer comprises a clear plastics material.

8. A surface-covering material as defined in Claim 7 which comprises a non-slip layer comprising one or more particles suitable for providing a non-slip surface.

9. A surface-covering material as defined in Claim 7 or Claim 8 wherein the one or more particles of the non-slip layer are at least partially embedded in the wear layer.

10. A surface-covering material as defined in any one of Claims 7 to 9 which comprises a protective coating layer on an upper surface of the wear layer.

11. A floor-covering material comprising a backing layer and a surface-covering material as defined in any one of Claims 7 to 10 wherein the backing layer is applied to a lower surface of the base layer; preferably the backing layer comprises a foamed plastics material.

12. A method of preparing a printed layered product which method comprises the following steps:
Providing a lightweight layered product as defined in any one of claims 1 to 4;
Winding the lightweight layered product on to a roll;
Loading the roll into a printing machine;
Applying a decorative layer having a print design to the printing layer of the lightweight layered product; and
Winding the printed layered product on to a roll for transfer to a production line.

13. A method as defined in Claim 12 which further comprises a step of applying a wear layer to an upper surface of the decorative layer to form an upper layer; preferably the method further comprises a step of applying a protective coating layer to an upper surface of the wear layer to form an upper layer; preferably the method further comprises a step of applying a non-slip layer to the upper surface of the upper layer.

14. A method as defined in Claim 12 or Claim 13 which further comprises the following steps:
Inverting the layered product;
Applying a backing layer to the reinforcing base layer; and
Inverting the layered product.

15. A roll of a lightweight layered product for use in a digital printing process wherein the roll comprises a roll core and either the layered product as defined in any one of Claims 1 to 4 or the printed layered product as defined in Claim 5 or Claim 6.
